# EUROPEAN PATENT SPECIFICATION

(11) **EP 2 307 508 B1**
(45) Date of publication and mention of the grant of the patent: **05.09.2018**
(21) Application number: 09780688.9
(22) Date of filing: 16.07.2009
(51) Int. Cl.: C09B 35/03, C09B 35/30

(54) **ACID DYES**
SÄUREFARBSTOFFE
COLORANTS ACIDES

(30) Priority: 23.07.2008 EP 08160945
(43) Date of publication of application: 13.04.2011
(73) Proprietor: Archroma IP GmbH, 4153 Reinach (CH)
(72) Inventor: Geiger, Ulrich, 79395 Neuenburg/Rhein (DE); Hasemann, Ludwig, 79379 Muellheim-Niederweiler (DE); Nusser, Rainer, 79395 Neuenburg (DE)
(74) Representative: Ricker, Mathias
(86) International application number: PCT/EP2009/059128
(87) International publication number: WO 2010/010032

(56) References cited:
- EP-A1- 0 634 457
- EP-A2- 0 449 650
- JP-A- S59 101 607
- US-A- 3 124 566
- US-A- 4 143 034
- CHOY K K H ET AL: "LANGMUIR ISOTHERM MODELS APPLIED TO THE MULTICOMPONENT SORPTION OF ACID DYES FROM EFFLUENT ONTO ACTIVATED CARBON" JOURNAL OF CHEMICAL AND ENGINEERING DATA, AMERICAN CHEMICAL SOCIETY, US, vol. 45, 23 June 2000 (2000-06-23), pages 575-584, XP002509690 ISSN: 0021-9568 [retrieved on 2000-06-23]

## Description

The invention relates to novel acid dyes, a process for their preparation and their use for dyeing organic substrates. US 4,143,034 discloses phenylpyrazolone azo dyes belonging to the same group of Basic Dyes. US3124566 is directed to disazo dyes, processes for the production and a process for dyeing of fibres containing natural or synthetic polyamide. Acid dyes are known and dyes with bridging members are known as well. However, there is still a need for acid dyes with improved properties.
According to the invention there are provided compounds of formula (I) 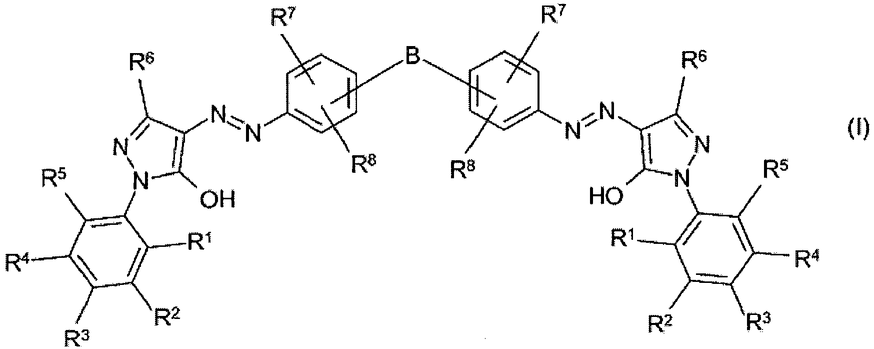 wherein
- R¹: signifies H, a sulpho group or halogen,
- R²: signifies H or a sulpho group,
- R³: signifies H, a sulpho group or halogen
- R⁴: signifies H, a sulpho group or halogen
- R⁵: signifies H, a substituted C₁ to C₄ alkyl group or an unsubstituted C₁ to C₄ alkyl group or halogen, wherein the substituents of the substituted C₁ to C₄ alkylgroup are selected from -OH, -O(C₁ to C₄-alkyl), -SO₃H and COOH,
- R⁶: signifies an C₁ to C₄ alkyl group, a carboxy group or a carbo C₁ to C₄ alkoxy group,
- R⁷: signify H, a sulpho group, a substituted C₁ to C₄ alkyl group or an unsubstituted C₁ to C₄ alkyl group, a substituted C₁ to C₄ alkoxy group or an unsubstituted C₁ to C₄ alkoxy group, wherein the substituents of the substituted C₁ to C₄ alkylgroup are selected from -OH, - O(C₁ to C₄-alkyl), -SO₃H and -COOH and wherein the substituents of the substituted C₁ to C₄ alkoxy group are selected from -OH, -O(C₁ to C₄ -alkyl), -SO₃H and -COOH.
- R⁸: signifies H, a substituted C₁ to C₄ alkyl group or an unsubstituted C₁ to C₄ alkyl group, a substituted C₁ to C₄ alkoxy group or an unsubstituted C₁ to C₄ alkoxy group, wherein the substituents of the substituted C₁ to C₄ alkylgroup are selected from -OH, -O(C₁ to C₄-alkyl), -SO₃H and -COOH and wherein the substituents of the substituted C₁ to C₄ alkoxy group are selected from -OH, -O(C₁ to C₄ -alkyl),-SO₃H and -COOH,
- B: signifies a group with the formula -SO₂-, -NH-CO-NH-, -CR⁹R¹⁰-, wherein
- R⁹: signifies H, or a unsubstituted C₁ to C₉ alkyl group or a substituted C₁ to C₉ alkyl group wherein the substituents of the substituted C₁ to C₉ alkyl groups are selected from the following substituents -OH, -O(C₁ to C₄ - Alkyl), - SO₃H, -COOH, -
- R¹⁰: signifies a unsubstituted C₁ to C₉ alkyl group or a substituted C₁ to C₉ alkyl group wherein the substituents of the substituted C₁ to C₉ alkyl groups are selected from the following substituents -OH, -O(C₁ to C₄ - Alkyl), -SO₃H, -COOH, or a substituted aryl group or R¹⁰ signifies a unsubstituted aryl group provided that R⁷ does not signify H.

By preference, the sum of carbon atoms of R9 and R10 together is at least 4 carbon atoms, more preferred R⁹ and R¹⁰ have together at least 5 carbon atoms. Even more preferred, the sum of carbon atoms of R⁹ and R¹⁰ together is 5 or 6 or 7 or 8 or 9 carbon atoms.

The preferred compounds of formula (I) bear at least one anionic substituent, preferably 1 or 2 or 3 anionic substituents, of which 2 anionic substituents are very particularly preferred. Preferably the at least one anionic substituent are part of the substituents R¹, R², R³, R⁴ or R⁵ or the at least one anionic substituent are selected from R¹, R², R³, R⁴ or R⁵, This means that preferably R⁶, R⁷, R⁸, R⁹ or R¹⁰ do not signify SO₃H nor do R⁶. R⁷, R⁸, R⁹ or R¹⁰ bear any SO₃H group. In the very preferred compounds according to the formula (I) R⁶ signifies a methyl group.

The at least one anionic substituent in the compounds of formula (I) are located by preference in one of the substituents R¹ and/or R³, more preferred, the at least one anionic substituent is located in one of the substituents R².

Preferred anionic substituents are carboxyl and/or sulpho groups, and sulpho groups are particularly preferred.

The preferred substituents of the substituted C₁ to C₄ alkyl groups are selected from the following substituents -OH, -O(C₁ to C₄ - Alkyl), -SO₃H, -COOH. The more preferred substituents of the substituted C₁ to C₄ alkyl groups are selected from the following substituents -OH, -O(C₁ to C₄ - Alkyl), -SO₃H, -COOH. The alkyl groups groups are branched or linear. The most preferred alkyl groups are methyl, ethyl, propyl, iso-proply, butyl, iso-butyl (2-Methylpropyl), pentyl, iso-pentyl (3-Methylbutyl), hexyl, heptyl, octyl, or nonyl.

The preferred substituents of the substituted C₁ to C₄ alkoxy group are selected from the following substituents -OH, -O(C₁ to C₄ - Alkyl), -SO₃H, -COOH, -NH(C₁ to C₄ - Alkyl). The the alkoxy groups are branched or linear.

Preferred substituents of the substituted aryl groups are selected from the following substituents -OH, -O(C1 to C4 - Alkyl), -SO₃H, substituted C1 to C4 alkyl groups, unsubstituted alkyl groups, a substituted C1 to C4 alkoxy group and an unsubstituted C1 to C4 alkoxy group. The preferred aryl groups phenyl groups. Preferably the aryl groups are not further substituted or are substituted by a methyl group.

In preferred compounds of the general formula (I)
- R¹: signifies chlorine,
- R²: signifies H or a sulpho group, R₃ signifies H or a sulpho group,
- R⁴: signifies a sulpho group or chlorine,
- R⁵: signifies H, methyl or chlorine,
- R⁶: signifies C₁ to C₄ alkyl group, -COOCH₃, -COOCH₂CH₃,
- R⁷: signify H, a sulpho group, a substituted C₁ to C₄ alkyl group or an unsubstituted C₁ to C₄ alkyl group, a substituted C₁ to C₄ alkoxy group or an unsubstituted C₁ to C₄ alkoxy group, wherein the substituents of the substituted C₁ to C₄ alkylgroup are selected from -OH, -O(C₁ to C₄-alkyl), -SO₃H and-COOH and wherein the substituents of the substituted C₁ to C₄ alkoxy group are selected from -OH, -O(C₁ to C₄ -alkyl), -SO₃H and -COOH,
- R⁸: signifies H, a substituted C¹ to C⁴ alkyl group or an unsubstituted C¹ to C⁴ alkyl group, a substituted C1 to C4 alkoxy group or an unsubstituted C1 to C⁴ alkoxy group, wherein the substituents of the substituted C₁ to C₄ alkylgroup are selected from -OH, -O(C₁ to C₄-alkyl), -SO₃H and -COOH and wherein the substituents of the substituted C₁ to C₄ alkoxy group are selected from -OH, -O(C₁ to C₄-alkyl), -SO₃H and -COOH,
- B: signifies a group with the formula -SO₂-, -NH-CO-NH-, -CR₉R₁₀-, wherein
- R⁹: signifies H, an unsubstituted C₁ to C₉ alkyl group, preferably H or -CH₃,
- R¹⁰: signifies a substituted C₁ to C₉ alkyl group wherein the substituents of the substituted C₁ to C₉ alkyl groups are selected from the following substituents -OH, -O(C₁ to C₄ - Alkyl), -SO₃H, or an unsubstituted C₁ to C₉ alkyl group, or a substituted aryl group or R₁₀ signifies a unsubstituted aryl group provided that R₇ does not signify H.

In even more preferred compounds of the general formula (I)
- R¹: signifies chlorine,
- R²: signifies H or a sulpho group,
- R³: signifies H or a sulpho group,
- R⁴: signifies a sulpho group or chlorine,
- R⁵: signifies H,
- R⁶: signifies a methyl or ethyl group, -COOCH₃, -COOCH₂CH₃,
- R⁷: signify H, a sulpho group, an unsubstituted C₁ to C₂ alkyl group or an unsubstituted C₁ to C₂ alkoxy group,
- R⁸: signifies H or an unsubstituted C₁ to C₂ alkyl group or an unsubstituted C₁ to C₂ alkoxy group,
- B: signifies a group with the formula -SO₂-, -CR⁹R¹⁰-, wherein
- R⁹: signifies H, an unsubstituted C₁ to C₉ alkyl group, preferably H or -CH₃,
- R¹⁰: signifies a substituted C₁ to C₉ alkyl group wherein the substituents of the substituted C₁ to C₉ alkyl groups are selected from the following substituents -OH, -O(C₁ to C₄ - Alkyl), -SO₃H, -COOH or an unsubstituted C₁ to C₉ alkyl group, or a substituted aryl group or R¹⁰ signifies a unsubstituted aryl group provided that R⁷ does not signify H

In the most preferred compound of the general formula (I)
- R¹: signifies chlorine,
- R²: signifies H,
- R³: signifies H or a sulpho group,
- R⁴: signifies a sulpho group or chlorine,
- R⁵: signifies H,
- R⁶: signifies a methyl group,
- R⁷: signify H, a sulpho group, an unsubstituted C₁ to C₂ alkyl group or an unsubstituted C₁ to C₂ alkoxy group,
- R⁸: signifies H, or an unsubstituted C₁ to C₂ alkyl group or an unsubstituted C₁ to C₂ alkoxy group,
- B: signifies a group with the formula -SO₂-, -NH-CO-NH-, -CR⁹R¹⁰- of which the moiety -CR⁹R¹⁰- is the preferred bridging member, wherein
- R⁹: signifies H,
- R¹⁰: signifies a substituted C₁ to C₉ alkyl group wherein the substituents of the substituted C₁ to C₉ alkyl groups are selected from the following substituents -OH, -O(C₁ to C₄ - Alkyl), -SO₃H, -COOH or an unsubstituted C₁ to C₉ alkyl group, or a substituted aryl group or R¹⁰ signifies a unsubstituted aryl group provided that R⁷ does not signify H.

The preferred group R¹⁰ signifies an unsubstituted C₁ to C₉ alkyl group, preferably -CH₃, - (CH₂CH(CH₃)₂), -(CH(CH₂CH₃)₂) or -C(CH₂CH₃)(CH₂CH₂CH₂CH₃)- or an unsubstituted phenyl group or R¹⁰ signifies a substituted phenyl preferably a para-tolyl group. The preferred group R⁹ signifies H.

Preferably the compounds of the formula (I) have the formula (I') 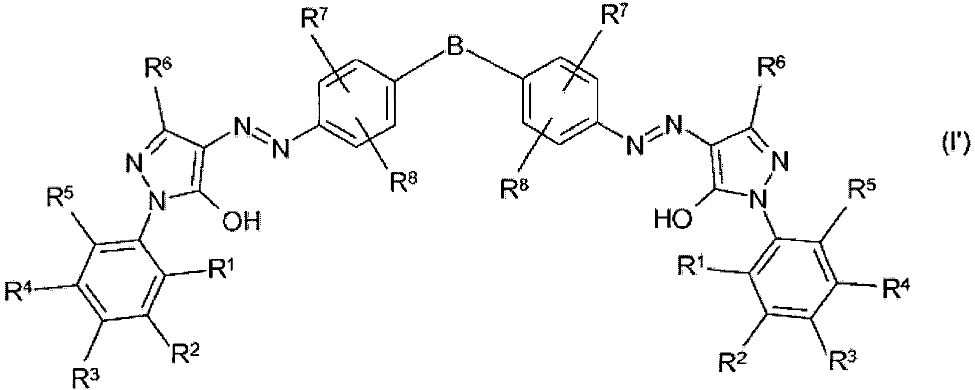 wherein the substituents have the meaning as indicated above.

The invention also provides a process for preparing compounds of the formula (I). The present invention's compounds of the formula (I) can be prepared under conventional conditions in conventional processes.

In these processes, both the amine functions of compounds of the formula (II) 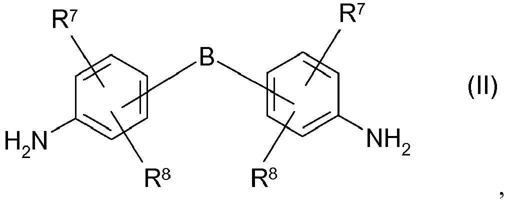 which are known from the literature are conventionally diazotized and coupled onto totally two equivalents of a compound of the formula (III) 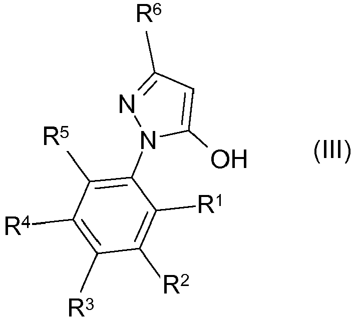 where the substituents are each as defined above.

In these processes, the particular diamine is cooled to 0-10°C or preferably to 0-5°C and diazotized by adding nitrosylsulphuric acid or sodium nitrite. Afterwards, the bis-diazotized diamine is allowed to react with the compound (III), preferably in aqueous solution.

The dyes of the formula (I) can be isolated from the reaction medium by conventional processes, for example by salting out with an alkali metal salt, filtering and drying, if appropriate under reduced pressure and at elevated temperature.

Depending on the reaction and/or isolation conditions, the dyes of the formula (I) can be obtained as free acid, as salt or as mixed salt which contains for example one or more cations selected from alkali metal ions, for example the sodium ion, or an ammonium ion or alkylammonium cation, for example mono-, di- or trimethyl- or -ethylammonium cations. The dye can be converted by conventional techniques from the free acid into a salt or into a mixed salt or vice versa or from one salt form into another. If desired, the dyes can be further purified by diafiltration, in which case unwanted salts and synthesis by-products are separated from the crude anionic dye.

The removal of unwanted salts and synthesis by-products and partial removal of water from the crude dye solution is carried out by means of a semipermeable membrane by applying a pressure whereby the dye is obtained without the unwanted salts and synthesis by-products as a solution and if necessary as a solid body in a conventional manner.

The dyes of the formula (I) and their salts are particularly suitable for dyeing or printing fibrous material consisting of natural or synthetic polyamides in yellow to greenish yellow shades. The dyes of the formula (I) and their salts are suitable for producing Inkjet printing inks and for using these Inkjet printing inks to print fibrous material which consists of natural or synthetic polyamides or cellulose (paper for example).

The invention accordingly provides from another aspect for the use of the dyes of the formula (I), their salts and mixtures for dyeing and/or printing fibrous materials consisting of natural or synthetic polyamides. A further aspect is the production of Inkjet printing inks and their use for printing fibrous materials consisting of natural or synthetic polyamides.

Dyeing is carried out as per known processes, see for example the dyeing processes described in Ullmanns Encyklopädie der technischen Chemie, 4th Edition, 1982, Volume 22, pages 658-673 or in the book by M. Peter and H.K. Rouette, Grundlagen der Textilveredlung, 13th Edition, 1989, pages 535-556 and 566-574. Preference is given to dyeing in the exhaust process at a temperature of 30 to 140°C, more preferably 80 to 120°C and most preferably at a temperature of 80 to 100°C, and at a liquor ratio in the range from 3:1 to 40:1.

The substrate to be dyed can be present in the form of yarn, woven fabric, loop-formingly knitted fabric or carpet for example. Fully fashioned dyeings are even permanently possible on delicate substrates, examples being lambswool, cashmere, alpaca and mohair. The dyes of the invention are particularly useful for dyeing fine-denier fibres (microfibres).

The dyes according to the present invention and their salts are highly compatible with known acid dyes. Accordingly, the dyes of the formula (I), their salts or mixtures can be used alone in a dyeing or printing process or else as a component in a combination shade dyeing or printing composition together with other acid dyes of the same class, i.e. with acid dyes possessing comparable dyeing properties, such as for example fastness properties and exhaustion rates from the dyebath onto the substrate. The dyes of the present invention can be used in particular together with certain other dyes having suitable chromophores. The ratio in which the dyes are present in a combination shade dyeing or printing composition is dictated by the hue to be obtained.

The novel dyes of the formula (I), as stated above, are very useful for dyeing natural and synthetic polyamides, i.e. wool, silk and all nylon types, on each of which dyeings having a high fastness level, especially good light fastness and good wet fastnesses (washing, alkaline perspiration) are obtained. The dyes of the formula (I) and their salts have a high rate of exhaustion. The ability of the dyes of the formula (I) and their salt to build up is likewise very good. On-tone dyeings on the identified substrates are of outstanding quality. All dyeings moreover have a constant hue under artificial light. Furthermore, the fastness to decating and boiling is good.

One decisive advantage of the novel dyes is that they are metal free and provide very level dyeings.

The compounds according to the invention can be used as an individual dye or else, owing to their good compatibility, as a combination element with other dyes of the same class having comparable dyeing properties, for example with regard to general fastnesses, exhaustion value, etc. The combination shade dyeings obtained have similar fastnesses to dyeings with the individual dye.

The invention's dyes of the formula (I) can also be used as yellow components in trichromatic dyeing or printing. Trichromatic dyeing or printing can utilize all customary and known dyeing and printing processes, such as for example the continuous process, exhaustion process, foam dyeing process and Ink-Jet process.

The composition of the individual dye components in the trichromatic dye mixture used in the process of the invention depends on the desired hue. A brown hue for example preferably utilizes 20 - 40% by weight of- the invention's yellow component, 40 - 60% by weight of an orange or red component and 10 - 20% by weight of a blue component.

The yellow component, as described above, can consist of a single component or of a mixture of different orange individual components conforming to the formula (I). Preference is given to double and triple combinations.

Particularly preferred red and/or blue components are described in WO2002/46318 or WO99/51681 respectively.

In the examples which follow, parts and percentages are by weight and temperatures are reported in degrees Celsius.

### Example 1:

29.6 Parts (0,1 mol) of 1,1-bis-(4-aminophenyl)-2-ethyl-hexane are tetrazotised according to known methods with 13.8 parts (0,2 mol) of sodium nitrite at 0-5°C in 200 parts of water and 60 parts of hydrochloric acid (ca. 30%) . 64.6 parts (0.2 mol) of a compound of the formula 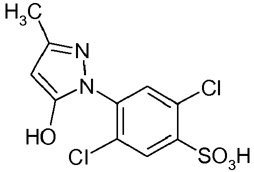 dissolved in 350 parts of water are added over 30 minutes to the ice cold tetrazotised solution. By the addition of 30% NaOH solution the pH is brought to 5-5.5 yielding a dyestuff of formula

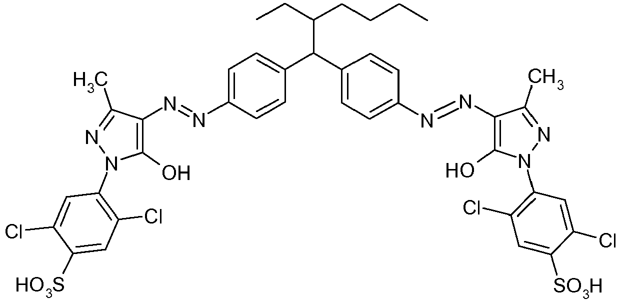

The dyestuff can be isolated by salting out with sodium chloride, filtered off and dried at 50°C under reduced pressure. It dyes wool and in particular polyamide fibres in yellow shade which show very good light and wet fastness properties (lamda(max) (λₘₐₓ) = 460 nm).

### Examples 2 - 46

Table 1 which follows contains dyes which can be prepared similarly to the method described in Examples 1 by using the corresponding starting materials. These dyes provide yellow dyeings having very good light and wet fastnesses on polyamide fibres and wool. λ max (lambda max) is indicated in nm (nano meters; measured in 1% acetic acid solution).

**Table 1:**

| | | | |
|---|---|---|---|
| 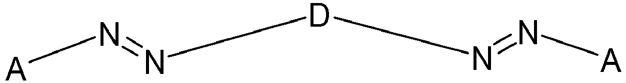 | | | |

| **Example** | **D** | **A** | λₘₐₓ **[nm]** |
|---|---|---|---|
| 2 | 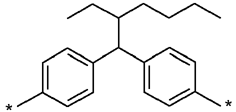 | 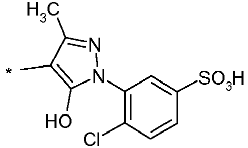 | 463 |
| 3 | 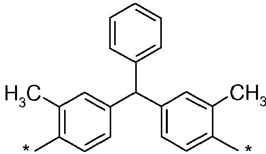 | 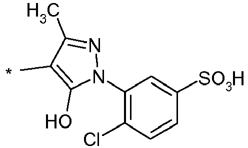 | 468 |
| 4 | 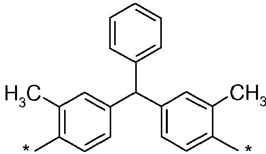 | 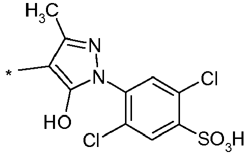 | 466 |
| 5 | 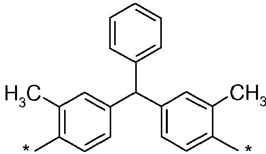 | 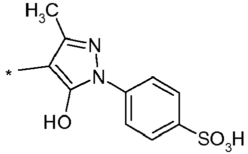 | 467 |
| 6 | 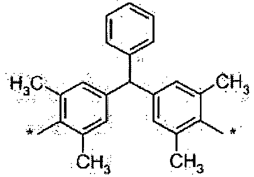 | 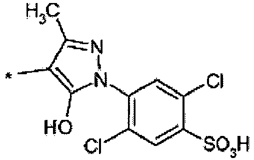 | 470 |
| 7 | 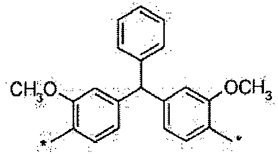 | 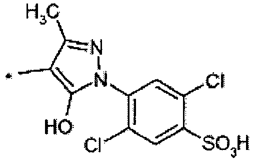 | 476 |
| 8 | 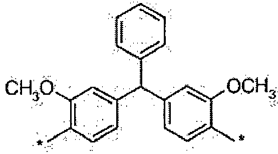 | 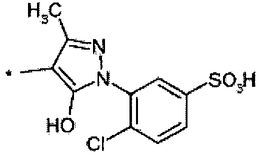 | 475 |
| 9 | 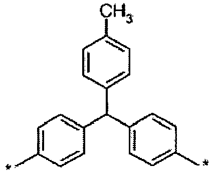 | 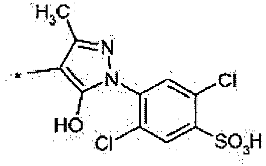 | 472 |
| 10 | 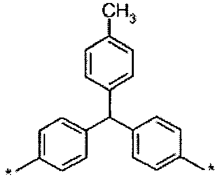 | 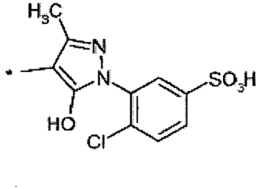 | 472 |
| 11 | 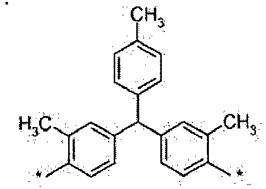 | 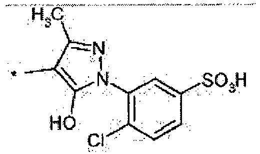 | 473 |
| 13 | 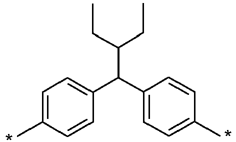 | 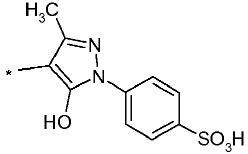 | 461 |
| 14 | 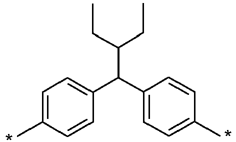 | 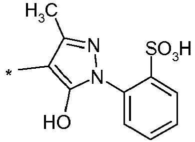 | 461 |
| 15 | 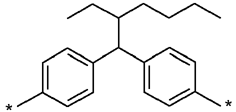 | 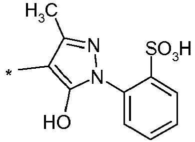 | 463 |
| 16 | 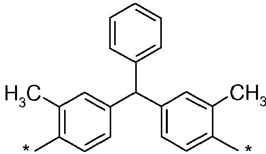 | 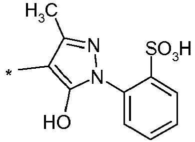 | 472 |
| 17 | 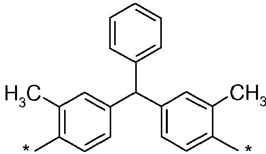 | 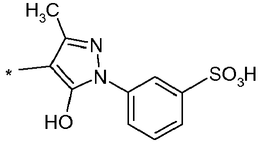 | 471 |
| 18 | 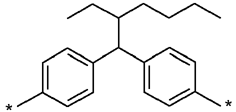 | 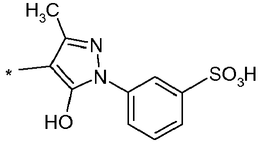 | 465 |
| 19 | 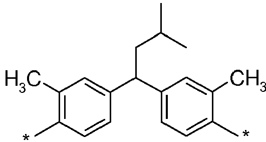 | 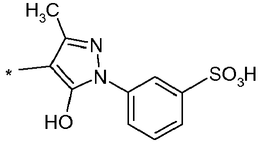 | 468 |
| 20 | 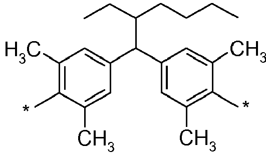 | 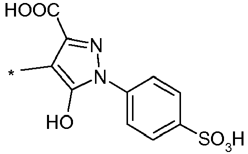 | 469 |
| 21 | 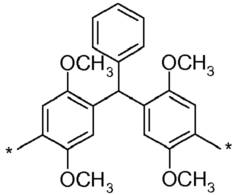 | 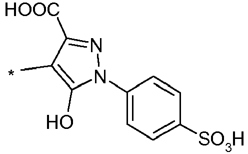 | 477 |
| 22 | 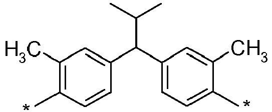 | 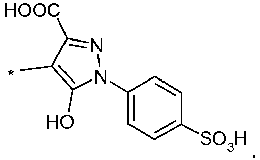 | 463 |
| 23 | 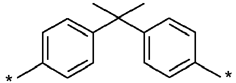 | 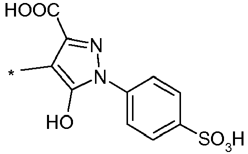 | 459 |
| 24 | 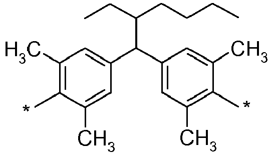 | 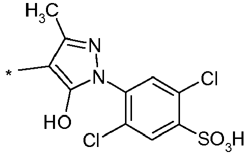 | 473 |
| 25 | 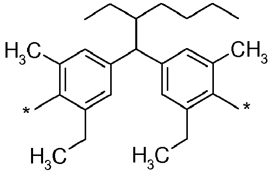 | 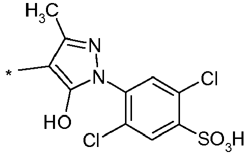 | 473 |
| 26 | 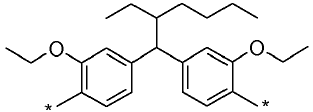 | 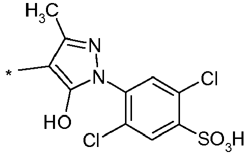 | 478 |
| 27 | 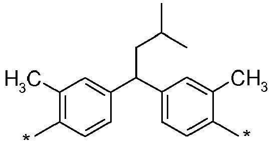 | 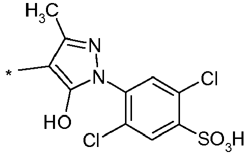 | 471 |
| 28 | 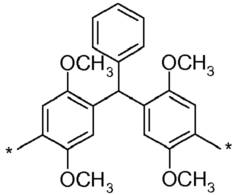 | 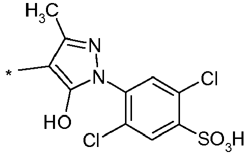 | 479 |
| 29 | 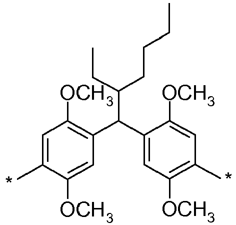 | 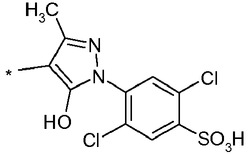 | 476 |
| 30 | 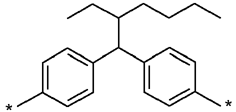 | 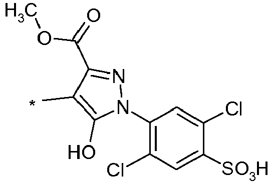 | 467 |
| 31 | 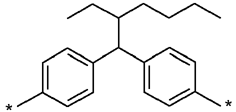 | 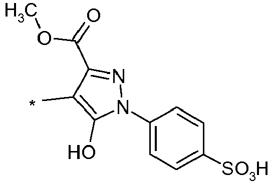 | 465 |
| 32 | 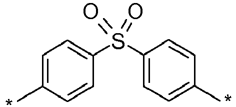 | 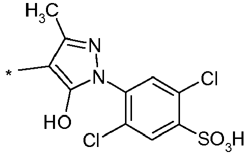 | 470 |
| 33 | 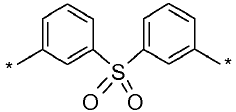 | 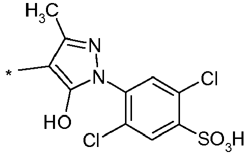 | 465 |
| 34 | 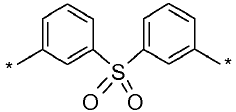 | 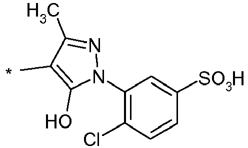 | 466 |
| 35 | 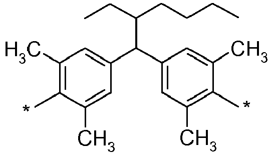 | 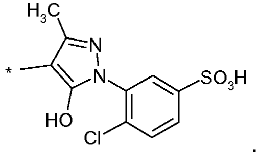 | 460 |
| 36 | 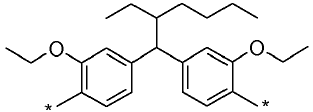 | 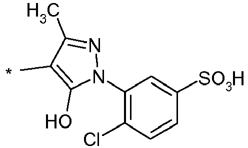 | 471 |
| 37 | 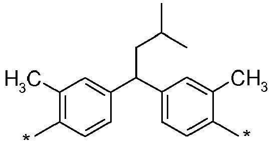 | 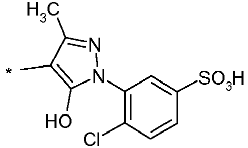 | 458 |
| 38 | 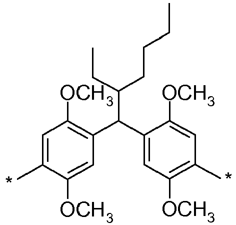 | 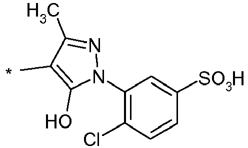 | 473 |
| 39 | 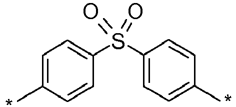 | 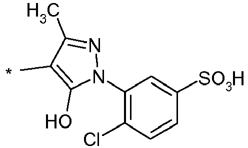 | 471 |
| 40 | 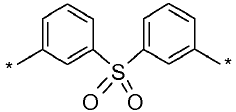 | 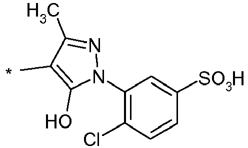 | 464 |
| 41 | 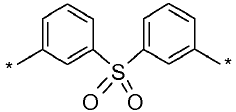 | 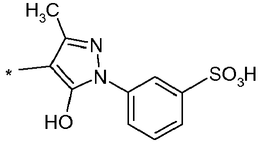 | 465 |
| 42 | 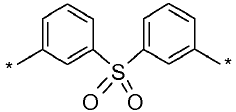 | 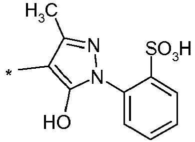 | 464 |
| 43 | 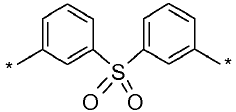 | 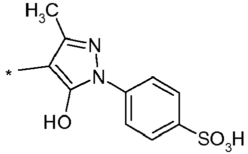 | 465 |
| 44 | 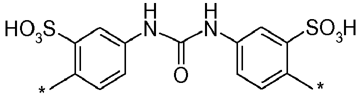 | 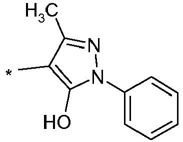 | 457 |
| 46 | 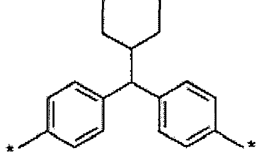 | 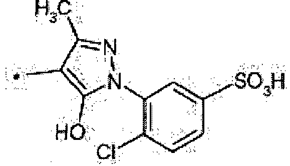 | |

### USE EXAMPLE A

A dyebath at 40°C, consisting of 2000 parts of water, 1 part of a weakly cation-active levelling agent which is based on an ethoxylated aminopropyl fatty acid amide and which has affinity for dye, 0.25 part of the dye of Preparation Example 1 and adjusted to pH 5 with 1-2 parts of 40% acetic acid is entered with 100 parts of nylon-6 fabric. After 10 minutes at 40°C, the dyebath is heated to 98°C at a rate of 1°C per minute and then left at the boil for 45-60 minutes. Thereafter it is cooled down to 70°C over 15 minutes. The dyeing is removed from the bath, rinsed with hot and then with cold water and dried. The result obtained is a yellow polyamide dyeing possessing good light and wet fastnesses.

### USE EXAMPLE B

A dyebath at 40°C, consisting of 2000 parts of water, 1 part of a weakly cation-active levelling agent which is based on an ethoxylated aminopropyl fatty acid amide and which has affinity for dye, 0.3 part of the dye of Preparation Example 1 and adjusted to pH 5.5 with 1-2 parts of 40% acetic acid is entered with 100 parts of nylon-6,6 fabric. After 10 minutes at 40°C, the dyebath is heated to 120°C at a rate of 1.5°C per minute and then left at this temperature for 15-25 minutes. Thereafter it is cooled down to 70°C over 25 minutes. The dyeing is removed from the dyebath, rinsed with hot and then with cold water and dried. The result obtained is a yellow polyamide dyeing with good levelness and having good light and wet fastnesses.

### USE EXAMPLE C

A dyebath at 40°C, consisting of 4000 parts of water, 1 part of a weakly amphoteric levelling agent which is based on a sulphated, ethoxylated fatty acid amide and which has affinity for dye, 0.4 part of the dye of Preparation Example 1 and adjusted to pH 5 with 1-2 parts of 40% acetic acid is entered with 100 parts of wool fabric. After 10 minutes at 40°C, the dyebath is heated to boiling at a rate of 1°C per minute and then left at the boil for 40-60 minutes. Thereafter it is cooled down to 70°C over 20 minutes. The dyeing is removed from the bath, rinsed with hot and then with cold water and dried. The result obtained is a yellow wool dyeing possessing good light and wet fastnesses.

### USE EXAMPLE D

100 parts of a woven nylon-6 material are padded with a 50°C liquor consisting of

| | | |
|---|---|---|
| 40 | parts | of the dye of Preparation Example 1, |
| 100 | parts | of urea, |
| 20 | parts | of a nonionic solubilizer based on butyldiglycol, |
| 15-20 | parts | of acetic acid (to adjust the pH to 4), |
| 10 | parts | of a weakly cation-active levelling agent which is based on an ethoxylated aminopropyl fatty acid amide and has affinity for dye, and |
| 810-815 | parts | of water (to make up to 1000 parts of padding liquor). |

The material thus impregnated is rolled up and left to dwell in a steaming chamber under saturated steam conditions at 85-98°C for 3-6 hours for fixation. The dyeing is then rinsed with hot and cold water and dried. The result obtained is a yellow nylon dyeing having good levelness in the piece and good light and wet fastnesses.

### USE EXAMPLE E

A textile cut pile sheet material composed of nylon-6 and having a synthetic base fabric is padded with a liquor containing per 1000 parts
- 1: part of dye of Preparation Example 1
- 4: parts of a commercially available thickener based on carob flour ether
- 2: parts of a nonionic ethylene oxide adduct of a higher alkylphenol
- 1: part of 60% acetic acid.

This is followed by printing with a paste which per 1000 parts contains the following components:
- 20: parts of commercially available alkoxylated fatty alkylamine (displace product)
- 20: parts of a commercially available thickener based on carob flour ether.

The print is fixed for 6 minutes in saturated steam at 100°C, rinsed and dried. The result obtained is a level-coloured cover material having a yellow and white pattern.

### USE EXAMPLE F

A dyebath at 40°C consisting of 2000 parts of water, 1 part of a weakly cation-active levelling agent which is based on an ethoxylated aminopropyl fatty acid amide and has affinity for dye, 1.5 parts of the dye of Example 1, 0.2 parts of the red dyestuff of preparation example 8 of the patent application WO2002/46318: 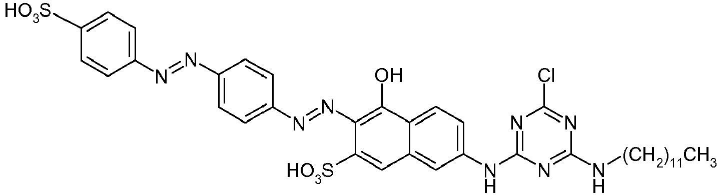 and 0.5 part of the blue dye of preparation example 46 of the patent application WO99/51681 and EP1066340 B1: 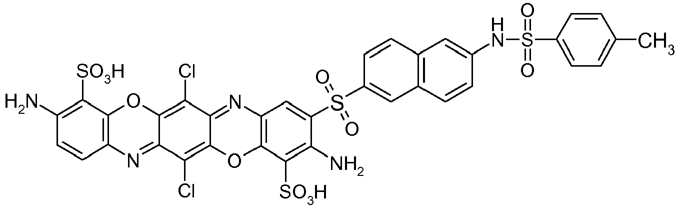 which is adjusted to pH 5 with 1-2 parts of 40% acetic acid is entered with 100 parts of woven nylon-6,6 fabric. After 10 minutes at 40°C, the dyebath is heated to 98°C at a rate of 1°C per minute and then left at the boil for 45 to 60 minutes. This is followed by cooling down to 70°C over 15 minutes. The dyeing is removed from the bath, rinsed with hot and then with cold water and dried. The result obtained is a level grey polyamide dyeing having good light and wet fastnesses.

### USE EXAMPLE G

100 parts of a chrome-tanned and synthetically retanned shave-moist grain leather are dyed for 30 minutes in a bath of 300 parts of water and 2 parts of the dye of Preparation Example 1 at 55°C. After addition of 4 parts of a 60% emulsion of a sulphited fish oil, the leather is fatliquored for 45 minutes. It is then acidified with 8.5% formic acid and milled for 10 minutes (final pH in the bath 3.5-4.0). The leather is then rinsed, allowed to drip dry and finished as usual. The result obtained is a leather dyed in a level clear orange hue with good fastnesses.

Use Examples A to G can also be carried out with dyes 2 to 46 with similar results.

### USE EXAMPLE H

3 parts of the dye of Preparation Example 3 are dissolved in 82 parts of demineralized water and 15 parts of diethylene glycol at 60°C. Cooling down to room temperature gives an orange printing ink which is very highly suitable for ink jet printing on paper or polyamide and wool textiles.

Use Example H can also be carried out with dyes 1 or 2 and 4 to 46 with similar results.

### USE EXAMPLE I

A dyebath consisting of 1000 parts of water, 80 parts of calcined Glauber salt, 1 part of sodium nitrobenzene-3-sulphonate and 1 part of dye from Example 1 is heated to 80°C in the course of 10 minutes. Then, 100 parts of mercerized cotton are added. This is followed by dyeing at 80°C for 5 minutes and then heating to 95°C in the course of 15 minutes. After 10 minutes at 95°C, 3 parts of sodium carbonate are added, followed by a further 7 parts of sodium carbonate after 20 minutes and another 10 parts of sodium carbonate after 30 minutes at 95°C. Dyeing is subsequently continued at 95°C for 60 minutes. The dyed material is then removed from the dyebath and rinsed in running demineralized water for 3 minutes. This is followed by two washes for 10 minutes in 5000 parts of boiling demineralized water at a time and subsequent rinsing in running demineralized water at 60°C for 3 minutes and with cold tap water for one minute. Drying leaves a brilliant yellow cotton dyeing having good fastnesses.

### USE EXAMPLE J

0.2 part of the dye of Preparation Example 1 is dissolved in 100 parts of hot water and the solution is cooled down to room temperature. This solution is added to 100 parts of chemically bleached sulphite pulp beaten in 2000 parts of water in a Hollander. After 15 minutes of commixing the stuff is sized with resin size and aluminium sulphate in a conventional manner. Paper produced from this stuff has a yellow shade with good wet fastnesses.

Use Examples I and J can also be carried out with dyes 2 to 46 with similar results.

## Claims

1. Compounds of the general formula (I) as free acid, salt or mixed salt 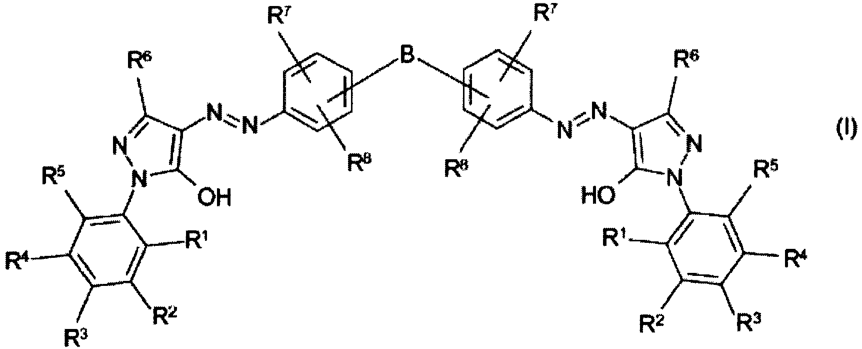 wherein
R¹ signifies H, a sulpho group or halogen,
R² signifies H or a sulpho group,
R³ signifies H, a sulpho group or halogen
R⁴ signifies H, a sulpho group or halogen,
R⁵ signifies H, a substituted C₁ to C₄ alkyl group or an unsubstituted C₁ to C₄ alkyl group or halogen, wherein the substituents of the substituted C₁ to C₄ alkyl group are selected from -OH, -O(C₁ to C₄ - alkyl), -SO₃H and-COOH,
R⁶ signifies an C₁ to C₄ alkyl group, a carboxy group or a carbo C₁ to C₄ alkoxy group,
R⁷ signify H, a sulpho group, a substituted C₁ to C₄ alkyl group or an unsubstituted C₁ to C₄ alkyl group, a substituted C₁ to C₄ alkoxy group or an unsubstituted C₁ to C₄ alkoxy group, wherein the substituents of the substituted C₁ to C₄ alkyl group are selected from -OH, -O(C₁ to C₄-alkyl), -SO₃H and -COOH, and wherein the substituents of the substituted C₁ to C₄ alkoxy group are selected from -OH, -O(C₁ to C₄ - alkyl), -SO₃H and -COOH,
R⁸ signifies H, a substituted C₁ to C₄ alkyl group or an unsubstituted C₁ to C₄ alkyl group, a substituted C₁ to C₄ alkoxy group or an unsubstituted C₁ to C₄ alkoxy group, wherein the substituents of the substituted C₁ to C₄ alkyl group are selected from -OH, -O(C₁ to C₄ - alkyl), -SO₃H and -COOH, and wherein the substituents of the substituted C₁ to C₄ alkoxy group are selected from -OH, -O(C₁ to C₄ - alkyl), -SO₃H and -COOH,
B signifies a group with the formula -SO₂-, -NH-CO-NH-, -CR⁹R¹⁰-, wherein
R⁹ signifies H, or a unsubstituted C₁ to C₉ alkyl group or a substituted C₁ to C₉ alkyl group wherein the substituents of the substituted C₁ to C₉ alkyl groups are selected from the following substituents -OH, -O(C₁ to C₄ - alkyl),-SO₃H, -COOH,
R¹⁰ signifies a unsubstituted C₁ to C₉ alkyl group or a substituted C₁ to C₉ alkyl group wherein the substituents of the substituted C₁ to C₉ alkyl groups are selected from the following substituents -OH, -O(C₁ to C₄ - alkyl), -SO₃H,-COOH, or a substituted aryl group or R¹⁰ signifies a unsubstituted aryl group provided that R₇ does not signify H,
**characterized in that** the compounds of formula (I) bear at least one anionic substituent.

2. Compounds according to claim 1 **characterized in that**
R¹ signifies chlorine,
R² signifies H or a sulpho group,
R₃ signifies H or a sulpho group,
R⁴ signifies a sulpho group or chlorine,
R⁵ signifies H, methyl or chlorine,
R⁶ signifies C₁ to C₄ alkyl group, -COOCH₃, -COOCH₂CH₃,
R⁷ signify H, a sulpho group, a substituted C₁ to C₄ alkyl group or an unsubstituted C₁ to C₄ alkyl group, a substituted C₁ to C₄ alkoxy group or an unsubstituted C₁ to C₄ alkoxy group, wherein the substituents of the substituted C₁ to C₄ alkyl group are selected from -OH, -O(C₁ to C₄-alkyl), -SO₃H and -COOH, and wherein the substituents of the substituted C₁ to C₄ alkoxy group are selected from -OH, -O(C₁ to C₄ - alkyl), -SO₃H and -COOH,
R⁸ signifies H, a substituted C₁ to C₄ alkyl group or an unsubstituted C₁ to C₄ alkyl group, a substituted C₁ to C₄ alkoxy group or an unsubstituted C₁ to C₄ alkoxy group, wherein the substituents of the substituted C₁ to C₄ alkyl group are selected from -OH, -O(C₁ to C₄ - alkyl), -SO₃H and -COOH, and wherein the substituents of the substituted C₁ to C₄ alkoxy group are selected from -OH, -O(C₁ to C₄ - alkyl), -SO₃H and -COOH,
B signifies a group with the formula -SO₂-, -NH-CO-NH-, -CR⁹R¹⁰-, wherein
R⁹ signifies H, or an unsubstituted C₁ to C₉ alkyl group, preferably H or -CH₃
R¹⁰ a substituted C₁ to C₉ alkyl group wherein the substituents of the substituted C₁ to C₉ alkyl groups are selected from the following substituents -OH, -O(C₁ to C₄ - Alkyl), -SO₃H, -COOH, or an unsubstituted C₁ to C₉ alkyl group, or a substituted aryl group or R¹⁰ signifies a unsubstituted aryl group provided that R₇ does not signify H.

3. Compounds according to claim 2 **characterized in that**
R¹ signifies chlorine,
R² signifies H or a sulpho group,
R³ signifies H or a sulpho group,
R⁴ signifies a sulpho group or chlorine,
R⁵ signifies H,
R⁶ signifies a methyl or ethyl group, -COOCH₃, -COOCH₂CH₃,
R⁷ signify H, a sulpho group, an unsubstituted C₁ to C₂ alkyl group, an unsubstituted C₁ to C₂ alkoxy group,
R⁸ signifies H, an unsubstituted C₁ to C₂ alkyl group, or an unsubstituted C₁ to C₂ alkoxy group,
B signifies a group with the formula -SO₂-, -NH-CO-NH-, -CR⁹R¹⁰-, wherein
R⁹ signifies H, an unsubstituted C₁ to C₉ alkyl group, preferably H or -CH₃,
R¹⁰ signifies a substituted C₁ to C₉ alkyl group wherein the substituents of the substituted C₁ to C₉ alkyl groups are selected from the following substituents -OH, -O(C₁ to C₄ - alkyl), -SO₃H, -COOH, or an unsubstituted C₁ to C₉ alkyl group, or a substituted aryl group or R¹⁰ signifies a unsubstituted aryl group provided that R⁷ does not signify H.

4. Process for preparing compounds of the formula (I) according to Claim 1, **characterized in that** both the amine functions of the compounds of the formula (II) 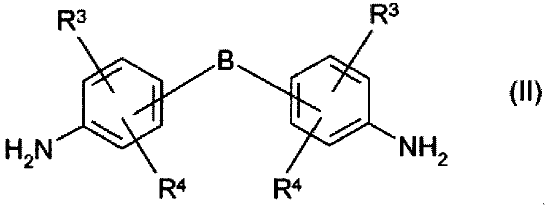 are diazotized and coupled onto totally two equivalents of a compound of the formula (III) 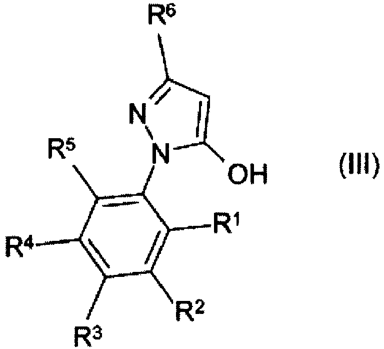 where the substituents are each as defined in claim 1.

5. Use of the compounds of the formula (I) according to Claim 1 for dyeing and/or printing organic substrates.

6. Use of compounds of formula (I) according to Claim 1 for dyeing and/or printing wool, silk and synthetic polyamides.

7. Use of compounds of formula (I) according to Claim 1 for preparing printing inks for the InkJet process.

## Patentansprüche

1. Verbindungen der allgemeinen Formel (I) als freie Säure, Salz oder gemischtes Salz 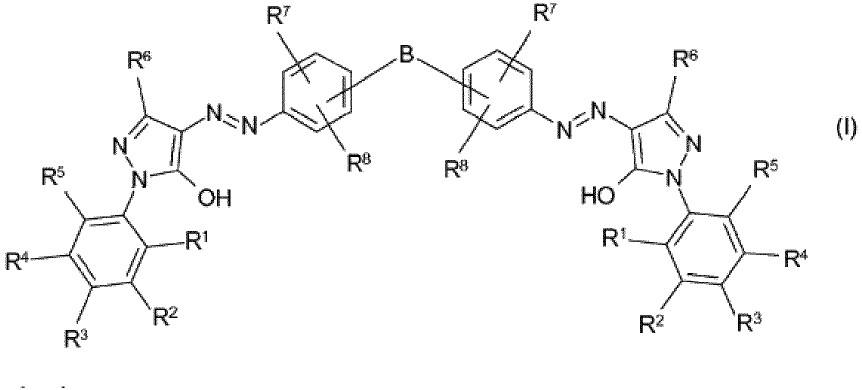 wobei
R¹ H, eine Sulfogruppe oder Halogen bedeutet,
R² H oder eine Sulfogruppe bedeutet,
R³ H, eine Sulfogruppe oder Halogen bedeutet,
R⁴ H, eine Sulfogruppe oder Halogen bedeutet,
R⁵ H, eine substituierte C₁- bis C₄-Alkylgruppe oder eine unsubstituierte C₁-bis C₄-Alkylgruppe oder Halogen bedeutet, wobei die Substituenten der substituierten C₁ bis C₄ Alkylgruppe ausgewählt sind aus -OH, -O(C₁ bis C₄ -Alkyl), -SO₃H und -COOH,
R⁶ eine C₁- bis C₄-Alkylgruppe, eine Carboxygruppe oder eine Carbo-C₁- bis C₄-Alkoxygruppe bedeutet,
R⁷ H, eine Sulfogruppe, eine substituierte C₁- bis C₄-Alkylgruppe oder eine unsubstituierte C₁- bis C₄-Alkylgruppe, eine substituierte C₁- bis C₄-Alkoxygruppe oder eine unsubstituierte C₁- bis C₄-Alkoxygruppe bedeutet, wobei die Substituenten der substituierten C₁- bis C₄-Alkylgruppe ausgewählt sind aus -OH, -O(C₁ bis C₄ -Alkyl), -SO₃H und -COOH, und wobei die Substituenten der substituierten C₁- bis C₄-Alkoxygruppe ausgewählt sind aus -OH, -O(C₁ bis C₄ -Alkyl), -SO₃H und -COOH,
R⁸ H, eine substituierte C₁- bis C₄-Alkylgruppe oder eine unsubstituierte C₁-bis C₄-Alkylgruppe, eine substituierte C₁- bis C₄-Alkoxygruppe oder eine unsubstituierte C₁- bis C₄-Alkoxygruppe bedeutet, wobei die Substituenten der substituierten C₁- bis C₄-Alkylgruppe ausgewählt sind -OH, -O(C₁ bis C₄-Alkyl), -SO₃H und -COOH, und wobei die Substituenten der substituierten C₁- bis C₄-Alkoxygruppe ausgewählt sind aus -OH, -O(C₁ bis C₄-Alkyl), -SO₃H und -COOH,
B eine Gruppe mit der Formel -SO₂-, -NH-CO-NH-, -CR⁹R¹⁰- bedeutet, wobei
R⁹ H oder eine unsubstituierte C₁- bis C₉-Alkylgruppe oder eine substituierte C₁- bis C₉-Alkylgruppe bedeutet, wobei die Substituenten der substituierten C₁- bis C₉-Alkylgruppen ausgewählt sind aus den folgenden Substituenten -OH, -O(C₁- bis C₄-Alkyl), -SO₃H, -COOH,
R¹⁰ eine unsubstituierte C₁- bis C₉-Alkylgruppe oder eine substituierte C₁- bis C₉-Alkylgruppe bedeutet, wobei die Substituenten der substituierten C₁- bis C₉-Alkylgruppen ausgewählt sind aus den folgenden Substituenten -OH,-O(C₁ bis C₄-Alkyl), -SO₃H, -COOH oder eine substituierte Arylgruppe oder R¹⁰ eine unsubstituierte Arylgruppe bedeutet, vorausgesetzt, dass R⁷ nicht H bedeutet,
**dadurch gekennzeichnet, dass** die Verbindungen der Formel (I) mindestens einen anionischen Substituenten tragen.

2. Verbindungen nach Anspruch 1, **dadurch gekennzeichnet, dass**
R¹ Chlor bedeutet,
R² H oder eine Sulfogruppe bedeutet,
R³ H oder eine Sulfogruppe bedeutet,
R⁴ eine Sulfogruppe oder Chlor bedeutet,
R⁵ H, Methyl oder Chlor bedeutet,
R⁶ eine C₁- bis C₄-Alkylgruppe, -COOCH₃ oder -COOCH₂CH₃ bedeutet,
R⁷ H, eine Sulfogruppe, eine substituierte C₁- bis C₄-Alkylgruppe oder eine unsubstituierte C₁- bis C₄-Alkylgruppe, eine substituierte C₁- bis C₄-Alkoxygruppe oder eine unsubstituierte C₁- bis C₄-Alkoxygruppe bedeutet, wobei die Substituenten der substituierten C₁- bis C₄-Alkylgruppe ausgewählt sind aus -OH, -O(C₁ bis C₄ -Alkyl), -SO₃H und -COOH, und wobei die Substituenten der substituierten C₁- bis C₄-Alkoxygruppe ausgewählt sind aus -OH, -O(C₁ bis C₄ -Alkyl), -SO₃H und -COOH,
R⁸ H, eine substituierte C₁- bis C₄-Alkylgruppe oder eine unsubstituierte C₁-bis C₄-Alkylgruppe, eine substituierte C₁- bis C₄-Alkoxygruppe oder eine unsubstituierte C₁- bis C₄-Alkoxygruppe bedeutet, wobei die Substituenten der substituierten C₁- bis C₄-Alkylgruppe ausgewählt sind -OH, -O(C₁ bis C₄-Alkyl), -SO₃H und -COOH, und wobei die Substituenten der substituierten C₁- bis C₄-Alkoxygruppe ausgewählt sind aus -OH, -O(C₁ bis C₄-Alkyl), -SO₃H und -COOH,
B eine Gruppe mit der Formel -SO₂-, -NH-CO-NH-, -CR⁹R¹⁰- bedeutet, wobei
R⁹ H oder eine unsubstituierte C₁- bis C₉-Alkylgruppe, vorzugsweise H oder-CH₃ bedeutet,
R¹⁰ eine substituierte C₁- bis C₉-Alkylgruppe bedeutet, wobei die Substituenten der substituierten C₁- bis C₉-Alkylgruppen aus den folgenden Substituenten ausgewählt sind -OH, -O(C₁ bis C₄-Alkyl), -SO₃H, -COOH, oder eine unsubstituierte C₁- bis C₉-Alkylgruppe, oder eine substituierte Arylgruppe, oder R¹⁰ eine unsubstituierte Arylgruppe bedeutet, vorausgesetzt, dass R⁷ nicht H bedeutet.

3. Verbindungen nach Anspruch 2, **dadurch gekennzeichnet, dass**
R¹ Chlor bedeutet,
R² H oder eine Sulfogruppe bedeutet,
R³ H oder eine Sulfogruppe bedeutet,
R⁴ eine Sulfogruppe oder Chlor bedeutet,
R⁵ H bedeutet,
R⁶ eine Methyl- oder Ethylgruppe, -COOCH₃, -COOCH₂CH₃ bedeutet,
R⁷ H, eine Sulfogruppe, eine unsubstituierte C₁- bis C₂-Alkylgruppe, eine unsubstituierte C₁- bis C₂-Alkoxygruppe bedeutet,
R⁸ H, eine unsubstituierte C₁- bis C₂-Alkylgruppe oder eine unsubstituierte C₁-bis C₂-Alkoxygruppe bedeutet,
B eine Gruppe mit der Formel -SO₂-, -NH-CO-NH-, -CR₉R₁₀- bedeutet, wobei
R⁹ H, eine unsubstituierte C₁- bis C₉-Alkylgruppe, vorzugsweise H oder -CH₃ bedeutet,
R¹⁰ eine substituierte C₁- bis C₉-Alkylgruppe bedeutet, wobei die Substituenten der substituierten C₁- bis C₉-Alkylgruppen ausgewählt sind aus den folgenden Substituenten -OH, -O(C₁ bis C₄-Alkyl), -SO₃H, -COOH oder eine unsubstituierte C₁- bis C₉-Alkylgruppe, oder eine substituierte Arylgruppe, oder R¹⁰ bedeutet eine unsubstituierte Arylgruppe, vorausgesetzt, dass R⁷ nicht H bedeutet.

4. Verfahren zur Herstellung von Verbindungen der Formel (I) gemäß Anspruch 1, **dadurch gekennzeichnet, dass** beide Aminfunktionen der Verbindungen der Formel (II) 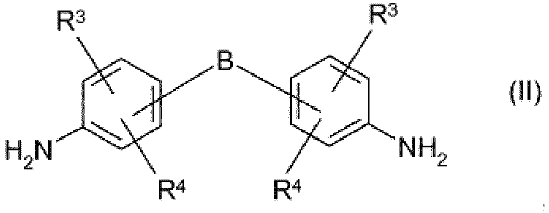 diazotiert werden und insgesamt mit zwei Äquivalenten einer Verbindung der Formel (III) 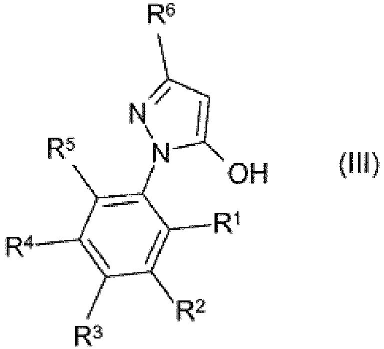 gekoppelt werden, wobei die Substituenten jeweils wie in Anspruch 1 definiert sind.

5. Verwendung der Verbindungen der Formel (I) gemäß Anspruch 1 zum Färben und/ oder Bedrucken von organischen Substraten.

6. Verwendung von Verbindungen der Formel (I) gemäß Anspruch 1 zum Färben und/ oder Bedrucken von Wolle, Seide und synthetischen Polyamiden.

7. Verwendung von Verbindungen der Formel (I) gemäß Anspruch 1 zur Herstellung von Druckfarben für das InkJet-Verfahren.

## Revendications

1. Composés de la formule générale (I) comme acide libre, sel ou sel mixte 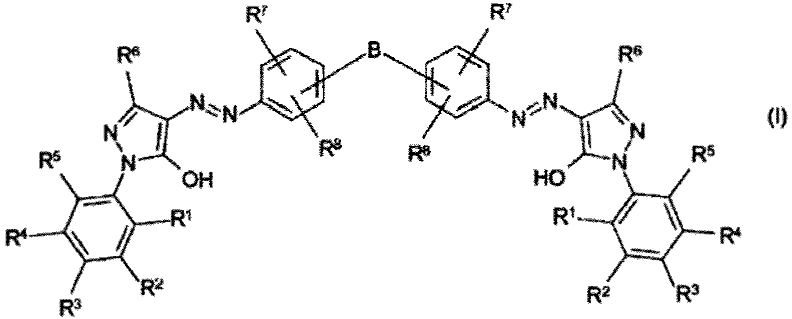 où
R¹ représente H, un groupe sulfo ou un halogène,
R² représente H ou un groupe sulfo,
R³ représente H, un groupe sulfo ou un halogène,
R⁴ représente H, un groupe sulfo ou un halogène,
R⁵ représente H, un groupe alkyle en C₁ à C₄ substitué ou un groupe alkyle en C₁ à C₄ non substitué ou un halogène, où les substituants du groupe alkyle en C₁ à C₄ substitués sont choisis parmi -OH, -O(alkyle en C₁ à C₄), -SO₃H et -COOH,
R⁶ représente un groupe alkyle en C₁ à C₄, un groupe carboxy ou un groupe carbo(alcoxy en C₁ à C₄),
R⁷ représente H, un groupe sulfo, un groupe alkyle en C₁ à C₄ substitué ou un groupe alkyle en C₁ à C₄ non substitué, un groupe alcoxy en C₁ à C₄ substitué ou un groupe alcoxy en C₁ à C₄ non substitué, où les substituants du groupe alkyle en C₁ à C₄ substitué sont choisis parmi -OH, -O(alkyle en C₁ à C₄), -SO₃H et -COOH, et où les substituants du groupe alcoxy en C₁ à C₄ substitué sont choisis parmi -OH, -O(alkyle en C₁ à C₄), -SO₃H et -COOH,
R⁸ représente H, un groupe alkyle en C₁ à C₄ substitué ou un groupe alkyle en C₁ à C₄ non substitué, un groupe alcoxy en C₁ à C₄ substitué ou un groupe alcoxy en C₁ à C₄ non substitué, où les substituants du groupe alkyle en C₁ à C₄ substitué sont choisis parmi -OH, -O(alkyle en C₁ à C₄), -SO₃H et -COOH, et où les substituants du groupe alcoxy en C₁ à C₄ substitué sont choisis parmi -OH, -O(alkyle en C₁ à C₄), -SO₃H et -COOH,
B représente un groupe avec la formule -SO₂-, -NH-CO-NH-, -CR⁹R¹⁰-, où
R⁹ représente H, ou un groupe alkyle en C₁ à C₉ non substitué ou un groupe alkyle en C₁ à C₉ substitué où les substituants des groupes alkyle en C₁ à C₉ substitués sont choisis parmi les substituants suivants -OH, -O(alkyle en C₁ à C₄), -SO₃H, -COOH,
R¹⁰ représente un groupe alkyle en C₁ à C₉ non substitué ou un groupe alkyle en C₁ à C₉ substitué où les substituants des groupes alkyle en C₁ à C₉ substitués sont choisis parmi les substituants suivants -OH, -O(alkyle en C₁ à C₄), -SO₃H, -COOH, ou un groupe aryle substitué ou R¹⁰ représente un groupe aryle non substitué à condition que R₇ ne représente pas H,
**caractérisés en ce que** les composés de formule (I) portent au moins un substituant anionique.

2. Composés selon la revendication 1 **caractérisés en ce que**
R¹ représente le chlore,
R² représente H ou un groupe sulfo,
R³ représente H ou un groupe sulfo,
R⁴ représente un groupe sulfo ou le chlore,
R⁵ représente H, le groupe méthyle ou le chlore,
R⁶ représente un groupe alkyle en C₁ à C₄, -COOCH₃, -COOCH₂CH₃,
R⁷ représente H, un groupe sulfo, un groupe alkyle en C₁ à C₄ substitué ou un groupe alkyle en C₁ à C₄ non substitué, un groupe alcoxy en C₁ à C₄ substitué ou un groupe alcoxy en C₁ à C₄ non substitué, où les substituants du groupe alkyle en C₁ à C₄ substitué sont choisis parmi -OH, -O(alkyle en C₁ à C₄), -SO₃H et -COOH, et où les substituants du groupe alcoxy en C₁ à C₄ substitué sont choisis parmi -OH, -O(alkyle en C₁ à C₄), -SO₃H et -COOH,
R⁸ représente H, un groupe alkyle en C₁ à C₄ substitué ou un groupe alkyle en C₁ à C₄ non substitué, un groupe alcoxy en C₁ à C₄ substitué ou un groupe alcoxy en C₁ à C₄ non substitué, où les substituants du groupe alkyle en C₁ à C₄ substitué sont choisis parmi -OH, -O(alkyle en C₁ à C₄), -SO₃H et -COOH, et où les substituants du groupe alcoxy en C₁ à C₄ substitué sont choisis parmi -OH, -O(alkyle en C₁ à C₄), -SO₃H et -COOH,
B représente un groupe avec la formule -SO₂-, -NH-CO-NH-, -CR⁹R¹⁰-, où
R⁹ représente H, ou un groupe alkyle en C₁ à C₉ non substitué, de préférence H ou -CH₃
R¹⁰ représente un groupe alkyle en C₁ à C₉ substitué où les substituants des groupes alkyle en C₁ à C₉ substitués sont choisis parmi les substituants suivants -OH, -O(alkyle en C₁ à C₄), -SO₃H, -COOH, ou un groupe alkyle en C₁ à C₉ non substitué, ou un groupe aryle substitué ou R¹⁰ représente un groupe aryle non substitué à condition que R₇ ne représente pas H.

3. Composés selon la revendication 2 **caractérisés en ce que**
R¹ représente le chlore,
R² représente H ou un groupe sulfo,
R³ représente H ou un groupe sulfo,
R⁴ représente un groupe sulfo ou le chlore,
R⁵ représente H,
R⁶ représente un groupe méthyle ou éthyle, -COOCH₃, -COOCH₂CH₃,
R⁷ représente H, un groupe sulfo, un groupe alkyle en C₁ à C₂ non substitué, un groupe alcoxy en C₁ à C₂ non substitué,
R⁸ représente H, un groupe alkyle en C₁ à C₂ non substitué, ou un groupe alcoxy en C₁ à C₂ non substitué,
B représente un groupe avec la formule -SO₂-, -NH-CO-NH-, -CR⁹R¹⁰-, où
R⁹ représente H, un groupe alkyle en C₁ à C₉ non substitué, de préférence H ou -CH₃,
R¹⁰ représente un groupe alkyle en C₁ à C₉ substitué où les substituants des groupes alkyle en C₁ à C₉ substitués sont choisis parmi les substituants suivants -OH, -O(alkyle en C₁ à C₄), -SO₃H, -COOH, ou un groupe alkyle en C₁ à C₉ non substitué, ou un groupe aryle substitué ou R¹⁰ représente un groupe aryle non substitué à condition que R⁷ ne représente pas H.

4. Procédé de préparation de composés de la formule (I) selon la revendication 1, **caractérisé en ce que** les deux fonctions amine des composés de la formule (II) 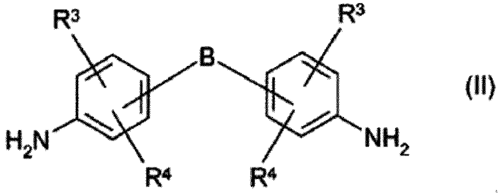 sont diazotées et couplées sur totalement deux équivalents d'un composé de la formule (III) 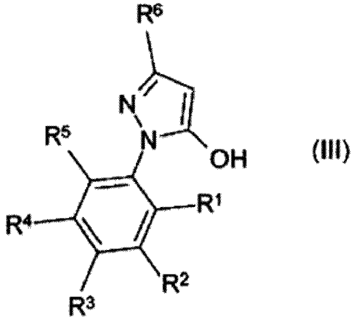 où les substituants sont chacun comme définis dans la revendication 1.

5. Utilisation des composés de la formule (I) selon la revendication 1 pour la teinture et/ou l'impression de substrats organiques.

6. Utilisation de composés de formule (I) selon la revendication 1 pour la teinture et/ou l'impression de laine, de soie et de polyamides synthétiques.

7. Utilisation de composés de la formule (I) selon la revendication 1 pour la préparation d'encres d'impression pour le procédé par jet d'encre.
